Europäisches Patentamt

European Patent Office

Office européen des brevets

(19)

(11) Veröffentlichungsnummer: **0 187 321 B1**

(12) **EUROPÄISCHE PATENTSCHRIFT**

(45) Veröffentlichungstag der Patentschrift: **07.08.91**

(51) Int. Cl.⁵: **F24F 13/00**

(21) Anmeldenummer: **85116128.1**

(22) Anmeldetag: **18.12.85**

(54) **Von der Decke eines Raumes abhängbare modulare Rahmenanordnung zur Aufnahme von Filtern mit Fluiddichtung für Reinraumdecken.**

(30) Priorität: **28.12.84 DE 3447901**

(43) Veröffentlichungstag der Anmeldung:
**16.07.86 Patentblatt 86/29**

(45) Bekanntmachung des Hinweises auf die
Patenterteilung:
**07.08.91 Patentblatt 91/32**

(84) Benannte Vertragsstaaten:
**AT BE CH DE FR GB IT LI NL SE**

(56) Entgegenhaltungen:
**EP-A- 0 116 772**

(73) Patentinhaber: **ABB FLÄKT AB**
**Sickla Allé 13**
**S-Nacka(SE)**

(72) Erfinder: **Ziemer, Wolf, Dipl.-Ing.**
**Spessartstrasse 12**
**W-1000 Berlin 33(DE)**
Erfinder: **Neubert, Fritz**
**Badangerstrasse 28 a**
**W-8901 Kissing(DE)**
Erfinder: **Hoelle, Wilhelm**
**Goetheastrasse 9**
**W-6308 Münzenberg 1(DE)**

(74) Vertreter: **Eitle, Werner, Dipl.-Ing. et al**
**Hoffmann, Eitle & Partner Patentanwälte Arabellastrasse 4**
**W-8000 München 81(DE)**

## Beschreibung

Die Erfindung betrifft eine von der Decke eines Raumes abhängbare modulare Rahmenanordnung zur Aufnahme von Filtern mit Fluiddichtung für Reinraumdecken nach dem Oberbegriff des Hauptanspruchs.

Für verschiedene Produktionszweige in der Industrie, beispielsweise in der Herstellung von integrierten Bausteinen, werden höchste Anforderungen an die Reinheit der Produktionsräume gestellt. Um diese Anforderungen zu erfüllen, sind Filterdecken entwickelt worden, bei denen eine Vielzahl von jeweils in einem Rahmen aufgenommenen Schwebstoffiltern nebeneinander als abgehängte Decke angeordnet sind, wobei die Luft zwischen ursprünglicher Decke und abgehängter Decke zugeführt und am Boden wieder abgeführt wird. Dabei sind die Filter an einer aus Profilschienen bestehenden abgehängten Rahmenanordnung befestigt. Um insbesondere auch die Zwischenräume zwischen den einzelnen Filtern gegen den Durchgang von Aerosolen abzudichten, wird im Stand der Technik die sogenannte Fluiddichtung verwendet. Zur Anwendung dieser Fluiddichtung besteht die Rahmenanordnung nach dem Stand der Technik aus U-förmigen Schienen, die mit Hilfe von Kreuz-, T- und Winkelstücken zu einem gitterartigen Rahmengerüst zusammengesteckt werden. In die U-förmigen Kanäle wird eine Flüssigkeit niedriger Viskosität oder eine Flüssigkeit, die bei Raumtemperatur erstarrt, zum Beispiel Vaseline oder Silikonfett, eingelassen. Dieses Fluid dient als Sperre gegenüber Staubdurchbrüchen an der Verbindungsstelle zwischen Filter- und Deckenrahmen. Das Schwebstoffilter wird mit einen umlaufenden Messer, zum Beispiel aus Aluminiumblech versehen, das in das Fluid eingetaucht wird, so daß eine partikeldichte Abdichtung gegenüber der Reinraumseite gewährleistet wird.

Aus der europäischen Patentanmeldung 0116772 ist eine derartige Rahmenanordnung bekannt, bei der die U-förmigen Schienen in entsprechend ausgebildete Kreuz-, T- und Winkel-Stücke eingelegt werden und beispielsweise durch Nieten mit diesen verbunden werden. Die Verbindungsstücke weisen Aufhängebolzen für die Abhängung von der Decke auf. Bei einer derartigen Rahmenordnung sind eine Vielzahl von Nachteilen feststellbar. Die Fluidkanäle der gesamten Rahmenordnung stehen untereinander in Verbindung. Dies bereitet große Schwierigkeiten beim Einfüllen des Fluids, da es keine Kontrolle des Füllstandes in den von der Einfüllstelle entfernt liegenden Kanälen gibt. Da die Fluidkanäle als einfache U-Schienen aus gekantetem Aluminiumblech ausgebildet sind, ist das Widerstandsmoment in x und in y-Richtung gering, so daß die Stabilität der gesamten Rahmenanordnung nicht sehr groß ist. Die U-Schienen sind nicht zur Befestigung von Teilen, wie Wände, Kabelkanäle oder Beleuchtungskörper geeignet, da die Befestigungselemente die Wände der Schiene durchstoßen könnten, wodurch das Dichtungsfluid hindurchfließen oder tropfen könnte, so daß der reine Renraum kontaminiert wird. Die Aufhängung der Rahmenanordnung erfolgt nur über die Verbindungsstücke zwischen den Schienen, so daß diese Verbindungsstücke alle tragende Teile sind. Das Rastermaß muß daher sehr genau an die Rohdecke übertragen werden, was mit großen Schwierigkeiten verbunden und nahezu unmöglich ist. Die Deckenkonstruktion kann bei dieser Art der Aufhängung nur mit großem Aufwand ausgefluchtet werden, so daß häufig die Deckenansicht im architektonischen Sinne den Ansprüchen nicht genügt. Da die Schienen in die Verbindungsstücke eingelegt werden, entsteht ein Höhenversatz, so daß die Deckenunterkante uneben ist.

Im Stand der Technik ist eine weitere Rahmenanordnung bekannt, bei dem die U-Schienen durch E-Schienen ersetzt sind. Der Mittelsteg trennt dabei die Fluidkanäle so auf, daß jedem Filter ein eigener Kanal zugeordnet ist, so daß das Füllen einfacher wird. Die Aufhängung erfolgt über in den Mittelsteg gebohrte Löcher und Querbolzen, wobei auch hier das Ausfluchten schwierig ist, da keine Verschiebbarkeit der Aufhängung gegeben ist. Die Schienen werden zur Querverbindung aneinandergeschoben, wobei die Ecken über Winkelstecker verbunden werden. An diesen Verbindungsstellen ist eine Dichtigkeit gegen das Austreten des Fluids nicht gewährleistet. Die oben beschriebenen übrigen Nachteile gelten auch für diese Anordnung.

Der Erfindung liegt die Aufgabe zugrunde, eine von der Decke abhängbare modulare Rahmenanordnung zur Aufnahme von Filtern mit Fluiddichtung für Reinraumdecken zu schaffen, die eine große Stabilität aufweist und die eine Befestigung sowohl von leichten Teilen, wie Strömungsschürzen,als auch von schweren Teilen, wie Wände oder Leuchtenkästen ermöglicht, wobei die Dichtigkeit gegenüber einem Austritt des Fluids gewährleistet sein soll.

Diese Aufgabe wird erfindungsgemäß durch die kennzeichnenden Merkmale des Hauptanspruchs in Verbindung mit den Merkmalen des Oberbegriffs gelöst.

Erfindungsgemäß sind die parallel zur Decke liegenden Stege der Profilschienen als Hohlprofile ausgebildet, wodurch die Steifigkeit der gesamten Rahmenanordnung verbessert wird. Das Hohlprofil erlaubt eine Befestigung von Teilen mittels Schrauben oder Nieten an der Unterseite der Profilschienen, ohne daß der Boden des Fluidkanals durchstoßen wird, so daß die Dichtigkeit gegen den Austritt des Fluids aus dem Fluidkanal gewahrt bleibt. Die Steifigkeit wird weiterhin erhöht durch Ausbilden des Hohlprofils des Steges in zwei Hohlkammern und einer zwischen diesen Hohlkammern liegenden T-förmigen Nut, wobei die Hohlkammern zur Befestigung kleiner leichter Teile mittels Blindnieten oder selbstschneidenden Schrauben und die dazwischen angeordnete T-Nut zur Aufnahme von selbstsperrenden Hammerkopfschrauben, die als beliebig positionierbare Befestigungteile für größere schwere Bauteile verwendbar sind, dienen.

Erfindungsgemäß ist das die Profilschienen verbindende Verbindungsstück als quadratisches Mittelteil mit angeformten Armen ausgebildet, wobei in der Mitte des Mittelteils ein Rohrstutzen vorgesehen ist und die untere Abschlußfläche des Mitteilteils tiefer liegt als die untere Abschlußfläche der Arme. Durch diese Ausbildung ist nach dem Einlegen der Arme in die Profilschienen eine fluchtende Unterseite der Rahmenanordnung gegeben, wobei die Rohrstutzen eine einwandfreie Durchführung von Sprinklerleitungen oder elektrischen Leitungen gewährleisten.

In einer Weiterbildung der Erfindung ist der Mittelsteg der Profilschienen ebenfalls als Hohlprofil ausgebildet, wodurch die Steifigkeit der Rahmenanordnung in y-Richtung erhöht wird, so daß ein Begehen ohne bleibende Deformierung wirklich wird. In einer weiteren Ausbildung des Mittelsteges endet dieser in einem massiven Kopf, der mit seitlich angeordneten Nuten versehen ist. Durch diese Nuten, die über die gesamte Länge der Profilschienen verlaufen, kann die Aufhängung, die in die Nuten eingreift, auf der Länge der Profilschienen beliebig positioniert werden. Durch Ausbilden der Oberfläche des Kopfes als Hohlkehle wird die Aufhängung sicherer, da die Klemmschraube der Aufhängevorrichtung abrutschsicher festgeklemmt werden kann.

In einer weiteren Ausbildung der Erfindung sind die Arme des Verbindungsstückes mit einem Mittelsteg versehen, der an dem Rohrstutzen endet und der an dem gegenüberliegenden Ende zur Aufnahme des Mittelsteges der Profilschiene aufgegabelt ist. Durch Vorsehen eines Einschnittes im Rohrstutzen wird nach Durchführen der Leitungen und nach Einlauf des Fluids, das auch in den Raum zwischen Leitung und Innenwand des Rohrstutzens läuft, eine einwandfreie Dichtung für die Durchführung erhalten, wobei das Ausfließen des Fluids nach unten durch einen Dichtungsring verhindert wird. Die erfindungsgemäße Ausbildung des Verbindungsstückes gewährleistet eine sehr gute Maßhaltigkeit und Winkligkeit des Profilschienenrasters, wobei außerdem eine gute Dichtigkeit an den Kreuzungspunkten gegeben ist.

Durch die Verwendung von stranggepreßtem Aluminium mit eloxierter Oberfläche als Material für die Profilschienen und die Verbindungsstücke ist eine Eigenpartikelproduktion, beispielsweise durch Korrosion, ausgeschlossen, wobei die Ableitfähigkeit von elektrostatischen Ladungen aufrechterhalten wird.

Weitere Vorteile ergeben sich aus den Unteransprüchen.

Die Erfindung ist in der Zeichnung dargestellt und wird in der nachfolgenden Beschreibung näher erläutert. Es zeigen:

Fig. 1    eine vereinfachte Seitenansicht einer Reinraumdecke;

Fig. 2    einen Schnitt durch eine erfindungsgemäße Profilschiene;

Fig. 3    eine Darstellung der Aufhängung der Profilschiene;

Fig. 4    eine Aufsicht auf ein Verbindungstück für Profilschienen;

Fig. 5    einen Schnitt durch ein Verbindungsstück entsprechend der Schnittlinie B-B nach Fig.4;

Fig. 6    einen Schnitt durch eine weitere Ausführungsform der Profilschiene; und

Fig. 7    einen Schnitt durch eine weitere Ausführungsform des Verbindungsstücks.

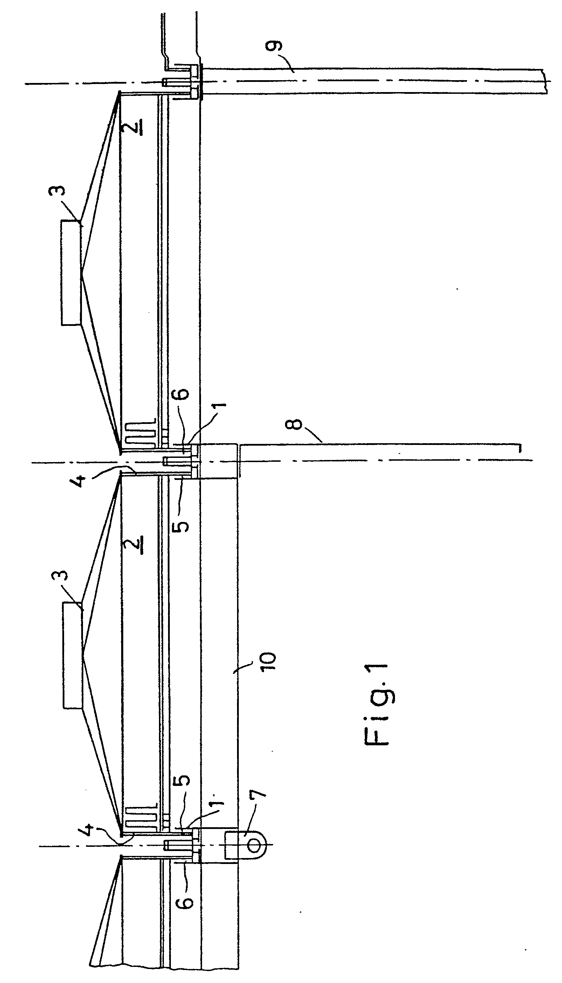

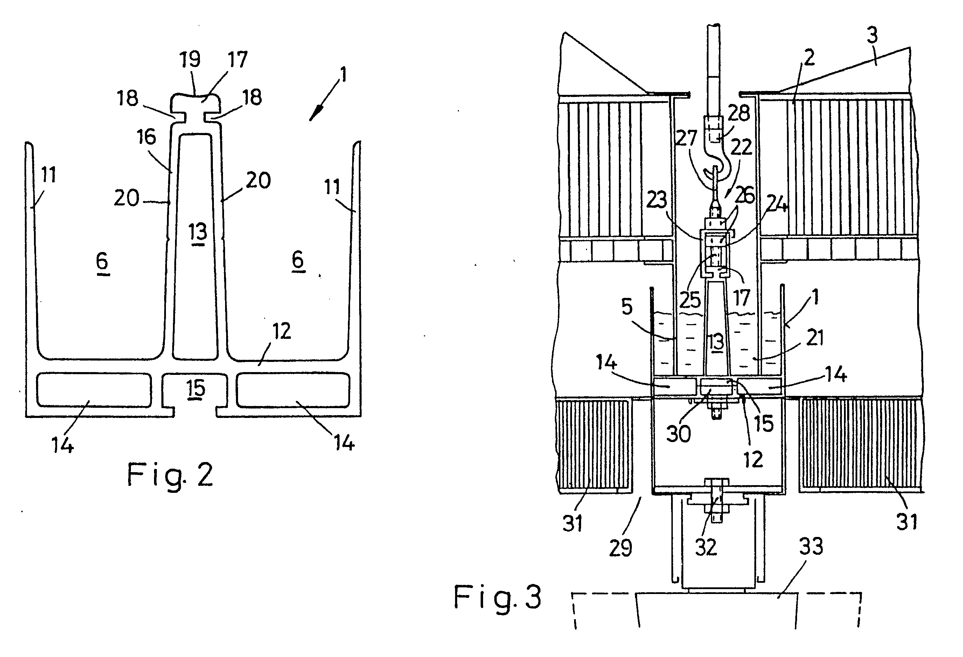

In Fig. 1 ist die Zusammensetzung einer Reinraumdecke dargestellt, die aus einer Rahmenanordnung aus Profilschienen 1 und aus Schwebstoffiltern 2 besteht. Die Profilschienen sind an nicht dargestellten Aufhängevorrichtungen mit der normalen Decke verbunden. Oberhalb der Schwebstoffilter 2 sind Zuführungen 3 für die Luft dargestellt. Die Schwebstoffilter 2 sind in Rahmen 4 aufgenommen, an denen umlaufende Messer 5 befestigt sind. Die Messer tauchen in U-förmige Kanäle 6 der Profilschienen 1 ein, die ein nicht dargestelltes Fluid enthalten. An den Profilschienen 1 sind direkt oder über Profilstücke Leuchten 7, Strömungsschürzen 8 oder sogar Wände 9 befestigt. Schematisch angedeutet sind Zwischendecken 10 dargestellt, die ebenfalls an den Profilschienen 1 befestigt sind. In Fig. 2 ist die für die Deckenrahmenanordnung verwendete Profilschiene 1 näher dargestellt. Die Profilschiene 1 weist zwei seitliche Flansche 11 und einen Steg 12 auf. Mittig zu den seitlichen Flanschen ist ein Mittelsteg 13 vorgesehen. Der Steg 12 ist als Hohlprofil ausgebildet und weist zwei seitliche Hohlräume 14 und eine zwischen ihnen vorgesehene, mittig angeordnete T-Nut 15 auf. Auch der Mittelsteg 13 ist als Hohlprofil ausgebildet, wobei seine Wände 16 etwas schräg nach oben verlaufen. Der Mittelsteg 13 ragt über die Seitenflansche 11 hinaus und endet in einem Kopf 17, in dem seitlich angeformte Nuten 18 vorgesehen sind. Die Oberfläche 19 des Kopfes 17 ist als Hohlkehle ausgebildet. Der Steg 13 ist seitlich mit Füllstandsmarkierungen 20 versehen, die jeweils den durch die Flansche 11, den Steg 12 und den Mittelsteg 13 gebildeten U-förmigen Kanälen 6 zugewandt sind.

In Fig. 3 ist der Einbau und die Aufhängung der Profilschiene 1 dargestellt, die in den U-förmigen Kanälen 6 mit Fluid 21 gefüllt sind. Die Rahmen 4 der Filter 3 gehen direkt in die umlaufenden Messer 5 über, die in das Fluid 21 eingetaucht werden, wobei sie auf der Innenseite des Steges 12 aufliegen und so die Halterung für das Filter 2 bilden.

Die Profilschiene 1 ist an ihrem Kopf 17 mittels einer Aufhängevorrichtung 22 aufgehängt, die zwei eine Klammer bildende Winkelstücke 23, 24 aufweist. Die Winkelstücke 23, 24 greifen in die Nuten 18 ein.

Ein Bolzen 25 ist durch die Winkelstücke 23, 24 hindurchgeführt und wird mittels Muttern 26 und/oder eines Schraubklotzes an die als Hohlkehle ausgebildete Oberfläche 19 des Kopfes 17 festgeklemmt, wobei gleichzeitig die Klammerwirkung der Winkelstücke 23, 24 hervorgerufen wird. Der Bolzen 25 ist über eine Öse 27 an einem mit der Decke verbundenen Haken 28 aufgehängt.

Fig. 3 zeigt weiterhin eine Möglichkeit zur Befestigung von Bauteilen an dem Steg 12 der Profilschiene. Dabei ist ein Profilstück 29 über in die T-Nut 15 eingelassene selbstklemmende Schrauben 30 befestigt, wobei in diesem Ausführungsbeispiel an dem Profilstück 29 eine Zwischendecke 31 und über weitere Schraubverbindungen 32 eine Leuchte 33 befestigt sind. Selbstverständlich ist das als Zwischenstück dienende Profilstück 29 nicht unbedingt notwendig, so kann beispielsweise die Leuchte 33 direkt an in der T-Nut 15 aufgenommene Schrauben gehalten werden.

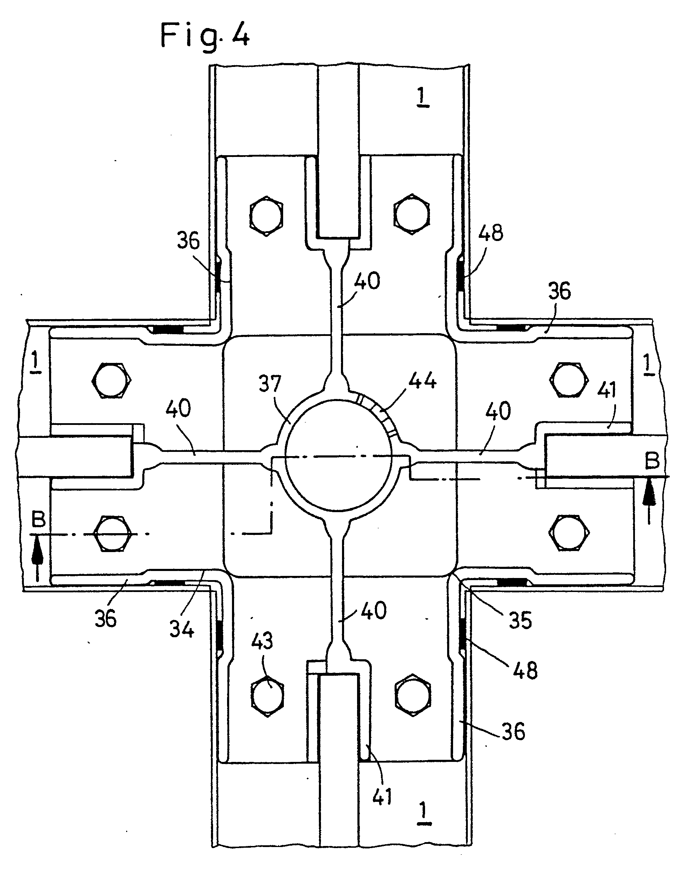

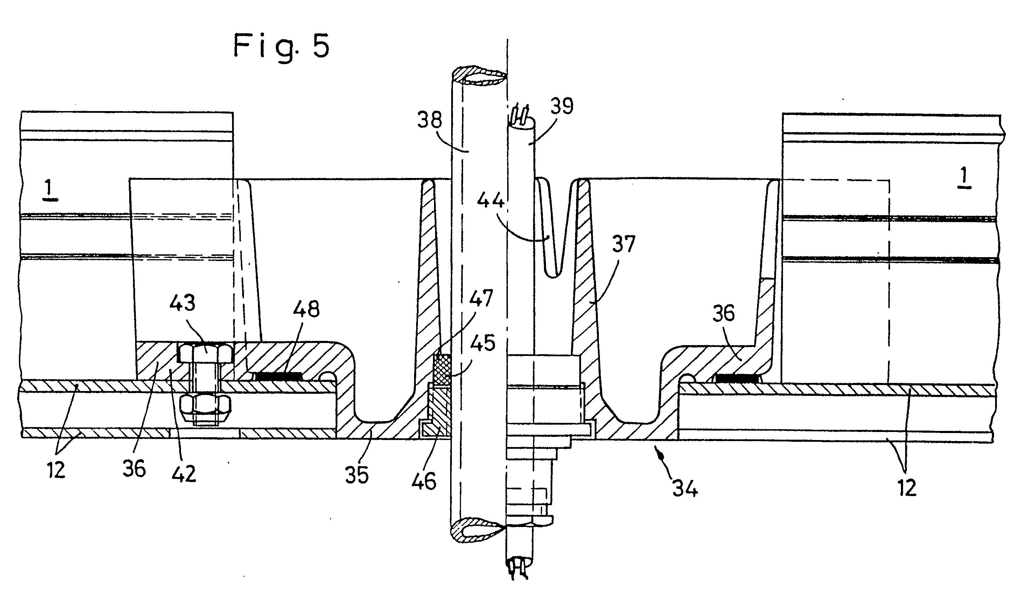

In den Fig. 4 und 5 ist ein Verbindungsstück 34 für die Profilschienen 1 dargestellt. Das Verbindungsstück 34 ist in dieser Ausführungsform als Kreuzstück ausgebildet, in der gleichen Weise können aber auch T- und Winkel-Verbindungsstücke aufgebaut sein. Das Verbindungsstück 34 besteht aus einem quadratischen Mittelteil 35 und daran angeformte Arme 36, wobei zwischen Unterfläche des Mittelteils 35 und Unterfläche der Arme 36 ein Höhenunterschied besteht, der der Höhe des Steges 12 der Profilschiene 1 entspricht. In der Mitte des Mittelteils 35 ist ein Rohrstutzen 37 vorgesehen, der zur Durchführung von Leitungen, wie Sprinklerleitungen 38 oder Elektroleitungen 39 dient. Entsprechend den Mittelstegen 13 der Profilschienen 1 ist auch das Verbindungsstück 34 mit Mittelstegen 40 versehen, die allerdings massiv sind. Die Mittelsteg 40 gehen in den Rohrstutzen 37 über und sind an dem offenen Ende der Arme 36 zu einer Gabel 41 geformt. Das Verbindungsstück 34 ist nach oben offen und weist ebenfalls seitliche Flansche auf, so daß die durch die Profilschienen 1 gebildeten U-förmigen Kanäle 6 über ein Verbindungsstück 34 um Ecken herum fortgesetzt werden können. Dazu werden die Verbindungsstücke 34 in die Profilschienen 1 eingelegt, wobei die Mittelstege 13 der Profilschienen 1 in den entsprechenden Gabel 41 aufgenommen werden. Die Flansche 11 der Profilschienen und die Stege 12 ragen über den Mittelsteg 13 heraus und sind bis zum Mittelteil 35 des Verbindungsstückes 34 geführt. Zwischen Innenseite des Steges 12 der Profilschiene und Außenfläche der Arme ist ein U-förmiges Dichtungsband 48 eingelegt, das zur Abdichtung gegen Austritt des Fluids 21 dient. Der Boden 42 der Arme 36 ist jeweils mit dem Steg 12 der dazugehörigen Profilschiene beidseitig vom Mittelsteg 40 bzw. der Gabel 41 über eine feste Schraubverbindung 43 verbunden, wodurch ein gleichmäßiger Druck aufgebracht wird, so daß die Arme 36 in den Profilschienen 1 nicht verkanten.

In dem Rohrstutzen 37 ist ein Einschnitt 44 vorgesehen, damit beim Einfüllen des Fluids dieses auch in das Rohrstutzeninnere gelangen kann. Ein entsprechender Einschnitt 49 ist in der Gabel vorgesehen, damit der Raum zwischen Gabel 41 und Mittelsteg 13 der Profilschiene 1 ausgefüllt werden kann. Zur Abdichtung zum Reinraum hin ist um die entsprechende durchgeführte Leitung 38, 39 ein Dichtungsring 45 angeordnet, der beispeilsweise von einer vom Reinraum her zu betätigenden Schraubhülse 46 gegen eine im Inneren des Rohrstutzens 37 vorgesehene Schulter 47 gedrückt wird.

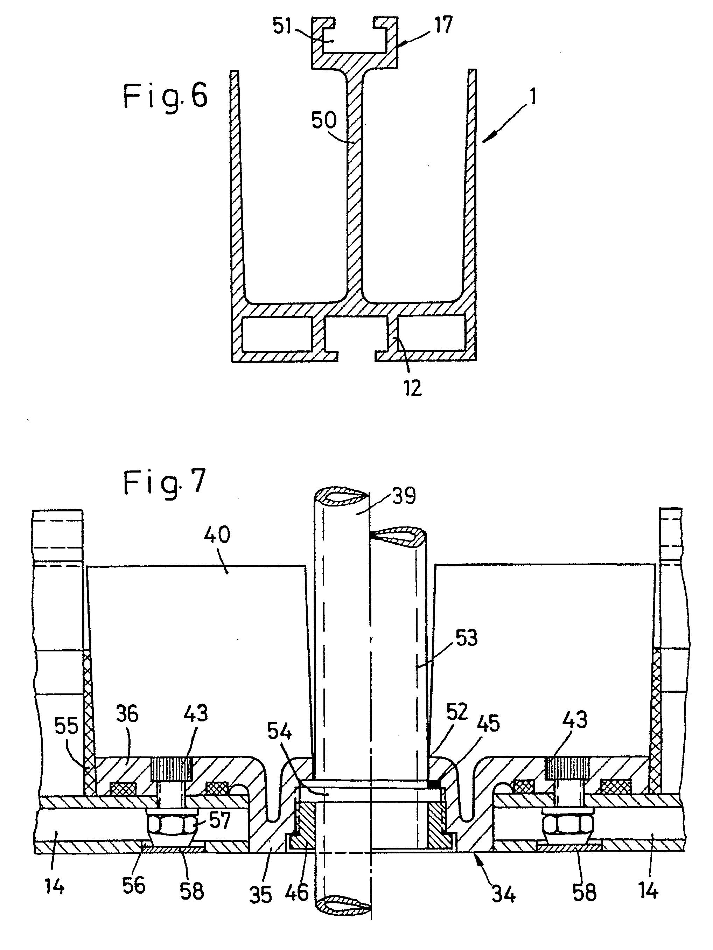

Fig. 6 zeigt ein weiteres Ausführungsbeispiel der Profilschiene 1, die insgesamt schmaler ausgebildet ist als das Ausführungsbeispiel nach Fig. 2 und deren Mittelsteg 50 massiv ausgebildet ist. Auch die Ausbildung des Kopfes 17 des Mittelsteges ist gegenüber dem Ausführungsbeispiel nach Fig. 2 verändert. Der Kopf 17 weist eine der T-förmigen Nut 15 des parallel zur Decke liegenden Steges 12 der Profilschiene 1 entsprechende T-Nut 51 auf, in die entsprechend geformte Schrauben eingeschoben werden können, an denen die Aufhängevorrichtung befestigt wird.

In Fig. 7 ist ein weiteres Ausführungsbeispiel für das Verbindungsstück 34 dargestellt. Das Verbindungsstück 34 besteht entsprechend dem nach Fig. 5 aus einem quadratischen Mittelteil 35, wobei in der Mitte dieses Mittelteils eine einfache Bohrung 52 vorgesehen ist, durch die die Leitungen 38,39 durchgeführt werden. Für die elektrischen Leitungen 39 muß dabei ein Leerrohr 53 vorgesehen sein, das die elektrischen Leitungen aufnimmt. Das Sprinklerrohr 38 und das Leerrohr 53 sind außen mit einem Bund 54 versehen, der als Anschlag dient und der mittels einer Gewindehülse 46 von der Raumreinseite her festgespannt wird. Dabei kann ein Dichtungsring 45 zwischengespannt sein. Die Mittelstege 40 des Verbindungsstückes 34 enden einerseits an der Bohrung 52 und andererseits an den Enden der Arme 36 ohne Aufgabelung nach Fig. 4 und 5, so daß zwischen den Mittelstegen 13, 50 der Profilschienen und denen der Verbindungsstücke 34 ein geringer Zwischenraum 55 entsteht. Dieser Zwischenraum wird nach dem Einfüllen des Fluids durch das Fluid ausgefüllt, das beim Einfüllen schnell erstarrt. In diesem Ausführungsbeispiel sind die Schrauben 43 direkt in das Verbindungsstück 34 dichtend eingepreßt, eingegossen oder eingeklebt, so daß sie einstückig mit dem Verbindungsstück verbunden sind. Nach dem Verschrauben des Verbindungsstückes mit den Profilschienen werden die Durchgriffslöcher 56 für die Muttern 57 der Schrauben mit Kappen 58 beispielsweise aus Kunststoff dicht verschlossen, damit die Hohlkammern 14 der Profilschienen 1 gegenüber der Reinraumseite abgeschlossen sind.

Falls keine Sprinklerrohre 38 oder Leitungen 39 in Leerrohren 53 durch die Verbindungsstücke 34 durchgeführt werden müssen, werden in die Bohrungen 52 der Verbindungsstücke 34 Blindrohre eingesetzt, die zur Reinraumseite hin geschlossen sind, so daß die einzelnen Fluidkanäle voneinander abgeschlossen sind.

## Patentansprüche

1. Von der Decke eines Raumes abhängbare modulare Rahmenanordnung zur Aufnahme von Filtern mit Fluiddichtung für Reinraumdecken mit U-förmige Kanäle zur Aufnahme des Fluids aufweisenden Profilschienen, die mit einem Mittelsteg versehen sind, und mit die Profilschienen verbindenden Verbindungsstücken, **dadurch gekennzeichnet,** daß die parallel zur Decke liegenden Stege (12) der Profilschienen (1) als Hohlprofile ausgebildet sind, und daß das Verbindungsstück (34) als Kreuz-, T- oder Winkelstück ausgebildet ist und ein quadratisches Mittelteil (35) und eine in dessen Mitte angeordnete Rohrdurchführung (37, 52) aufweist, wobei seitlich an das Mittelteil (35) angeformte Arme (36) U-förmige Kanäle bilden und die Unterfläche der Arme (36) und des Mittelteils (35) höhenversetzt sind.

2. Rahmenanordnung nach Anspruch 1, dadurch gekennzeichnet, daß jeder parallel zur Decke liegende Steg (12) mit zwei Hohlkammern (14) und einer zwischen diesen Hohlkammern (14) liegenden T-förmigen Nut (15) versehen ist.

3. Rahmenanordnung nach Anspruch 1 oder 2, dadurch gekennzeichnet, daß die Mittelstege (13) der Profilschienen (1) als Hohlprofile ausgebildet sind.

4. Rahmenanordnung nach einem der Ansprüche 1 bis 3, dadurch gekennzeichnet, daß der Mittelsteg (13) jeder Profilschiene (1) in einem massiven Kopf (17) endet, der mit seitlich angeordneten Nuten (18) versehen ist.

5. Rahmenanordnung nach Anspruch 4, dadurch gekennzeichnet, daß die der Decke zugewandte Fläche (19) des Kopfes (17) als Hohlkehle ausgebildet ist.

6. Rahmenanordnung nach einem der Ansprüche 1 bis 5, dadurch gekennzeichnet, daß der Mittelsteg (13) mit Füllstandsmarkierungen (20) versehen ist.

7. Rahmenanordnung nach Anspruch 5, dadurch gekennzeichnet, daß die Arme (36) Mittelstege (40) aufweisen, die auf die als Stutzen ausgebildete Rohrdurchführung (37) des Mittelteils (35) zulaufen, wobei die Mittelstege (40) zum offenen Ende der Arme (36) hin jeweils in einer Gabel (41) enden.

8. Rahmenanordnung nach einem der Ansprüche 1 bis 7, dadurch gekennzeichnet, daß die Arme (36) des Verbindungsstückes (34) in die Enden der Profilschienen (1) eingelegt und miteinander verbunden sind, wobei zwischen den Innenflächen der Profilschienen (1) und Außenflächen der Arme (36) des Verbindungsstückes (34) Dichtungsbänder (48) eingelegt sind.

9. Rahmenanordnung nach Anspruch 7 und 8, dadurch gekennzeichnet, daß jeweils der Mittelsteg (13) einer Profilschiene (1) in die Gabel (41) eines Armes (36) eingeschoben ist, wobei das Ende der Profilschiene (1) über das Ende ihres Mittelsteges (13) hinausragt.

10. Rahmenanordnung nach einem der Ansprüche 7 bis 9, dadurch gekennzeichnet, daß der Höhenversatz zwischen der Unterfläche des Mittelteils (35) des Verbindungsstückes (34) und die Unterfläche der Arme (36) der Höhe des Steges (12) der Profilschiene (1) entspricht.

11. Rahmenanordnung nach einem der Ansprüche 7 bis 10, dadurch gekennzeichnet, daß der die Rohrdurchführung (37, 52) des Mittelteils (35) zur Durchführung von Leitungen (38, 39) aller Art ausgebildet ist, wobei zwischen Leitung (38, 39) und Rohrdurchführung (37) eine Dichtung (45) vorgesehen ist.

12. Rahmenanordnung nach Anspruch 11, dadurch gekennzeichnet, daß die Dichtung (45) als Ring ausgebildet ist, der mittels einer Gewindehülse (46) gegen eine in der Rohrdurchführung (37) angeformte Schulter (47) gedrückt wird.

13. Rahmenanordnung nach einem der Ansprüche 7 bis 11, dadurch gekennzeichnet, daß der Rohrstutzen (37) im Mittelteil (35) des Verbindungsstückes (34) einen Einschnitt (44) für den Einlauf des Fluids (21) in das Innere des Rohrstutzens (37) aufweist.

14. Rahmenanordnung nach einem der Ansprüche 1 bis 13, dadurch gekennzeichnet, daß Profilschienen (1) und Verbindungsstücke (34) aus stranggepreßtem Aluminium mit eloxierter Oberfläche bestehen.

15. Rahmenanordnung nach einem der Ansprüche 8, 10 bis 12 und 14, dadurch gekennzeichnet, daß die Rohrdurchführung (52) als einfache Bohrung ausgebildet ist, durch die Sprinklerrohre oder Leerrohre geführt sind, wobei die Mittelstege (40) an der Bohrung enden.

16. Rahmenanordnung nach einem der Ansprüche 1 bis 15, dadurch gekennzeichnet, daß der Kopf des Mittelsteges (13, 50) der Profilschiene als T-förmige Nut ausgebildet ist.

**Claims**

1. Modular frame arrangement for receiving filters and suspendable from the ceiling of a room, comprising a fluid seal for clean room ceilings, profiled rails having U-section channels for receiving the fluid and provided with a central web, and connection members connecting the profiled rails, characterized in that the webs (12) of the profiled rails (1) extending parallel to the ceiling are constructed as hollow sections, and in that the connection member (34) is constructed as a four-way junction, T-junction or elbow member and has a square central part (35) and a tube guide (37, 52) arranged in its center, arms (36) being integrally formed laterally on the central part to form U-section channels and the lower surfaces of the arms (36) and of the central part (35) being offset in height.

2. Frame arrangement according to claim 1 characterized in that each web (12) extending parallel to the ceiling is provided with two hollow chambers (14) and a T-section groove (15) lying between these hollow chambers (14).

3. Frame arrangement according to claim 1 or 2 characterized in that the central webs (13) of the profiled rails (1) are constructed as hollow sections.

4. Frame arrangement according to any of claims 1 to 3 characterized in that the central web (13) of each profiled rail (1) ends in a solid head (17) which is provided with lateral grooves (18).

5. Frame arrangement according to claim 4 characterized in that the surface (19) of the head (17) directed towards the ceiling is constructed as a hollow recess.

6. Frame arrangement according to any of claims 1 to 5 characterized in that the central web (13) is provided with filling level marks (20).

7. Frame arrangement according to claim 5 characterized in that the arms (36) have central webs (40) which merge into the tube guide (37) of the central part (35) formed as a connector, the central webs (40) each ending in a fork at the open ends of the arms (36).

8. Frame arrangement according to any of claims 1 to 7 characterized in that the arms (36) of the connection member (34) are inserted into the ends of the profiled rails (1) and are connected together, sealing strips (48) being inserted between the inner surfaces of the profiled rails (1) and the outer surfaces of the arms (36) of the connection member (34).

9. Frame arrangement according to claims 7 and 8 characterized in that each central web (13) of a profiled rail (1) is inserted into the fork (4) of an arm (36), the end of the profiled rail (1) extending beyond the end of its central web (13).

10. Frame arrangement according to any of claims 7 to 9 characterized in that the height offset between the lower surface of the central part (35) of the connection member (34) and the lower surface of the arm (36) corresponds to the height of the web (12) of the profiled rail (1).

11. Frame arrangement according to any of claims 7 to 10 characterized in that the tube passage (37, 52) of the central part (35) is constructed for the passage of conduits (38, 39) of various types a seal (45) being provided between the conduit (38, 39) and the tube passage (37).

12. Frame arrangement according to claim 11 characterized in that the seal (45) is formed as a ring which is pressed by means of a threaded socket (46) against a shoulder (47) formed in the tube passage (37).

13. Frame arrangement according to any of claims 7 to 11 characterized in that the tube connector (37) has in the central part (35) of the connection member (34) a groove (44) for the entry of the fluid (21) into the interior of the tube connector (37).

14. Frame arrangement according to any of claims 1 to 13 characterized in that the profiled rails (1) and connection members (34) consist of extruded aluminium with anodized surfaces.

15. Frame arrangement according to any of claims 8, 10 to 12 and 14 characterized in that the tube guide (52) is formed as a bore through which are guided sprinkler tubes or empty tubes, the central webs (40) ending at the bore.

16. Frame arrangement according to any of claims 1 to 15 characterized in that the head of the central web (13, 50) of the profiled rail is implemented as a T-section groove.

## Revendications

1. Agencement-cadre apte à être pendu au plafond d'un local, pour recevoir des filtres avec un joint d'étanchéité par fluide, pour salles blanches, comportant des canaux en forme de U pour recevoir des rails profilés présentant le fluide, lesquels sont munis d'une âme médiane, et comportant des pièces de liaison reliant les rails profilés, caractérisé par le fait que les âmes (12) des rails profilés (1) situées parallèlement au plafond sont réalisées en tant que profilés creux et par le fait que la pièce de liaison (34) est réalisée en tant que pièce en forme de croix, de T ou de cornière et présente une partie médiane carrée (35) et un passage-tube (37, 52) agencé dans son milieu, des bras (36) formés latéralement contre la partie médiane (35) formant des canaux à profil en U, et les surfaces inférieures des bras (36) et de la partie médiane (35) étant décalées en hauteur.

2. Agencement-cadre selon revendication 1, caractérisé par le fait que chaque âme (12) disposée parallèlement au plafond est munie de deux cavités-chambres (14) et d'une rainure à profil en T (15) située entre ces cavités-chambres (14).

3. Agencement-cadre selon revendication 1 ou 2, caractérisé par le fait que les âmes médianes (13) des rails profilés (1) sont réalisées en tant que profilés creux.

4. Agencement-cadre selon l'une des revendications 1 à 3, caractérisé par le fait que l'âme médiane (13) de chaque rail profilé (1) se termine dans une tête massive (17) qui est munie de rainures (18) agencées latéralement.

5. Agencement-cadre selon revendication 4, caractérisé par le fait que la surface (19) de la tête (17) tournée vers le plafond est réalisée en tant que gorge.

6. Agencement-cadre selon l'une ds revendications 1 à 5, caractérisé par le fait que l'âme médiane (13) est munie de marques de niveau de remplissage (20).

7. Agencement-cadre selon revendication 5, caractérisé par le fait que les bras (36) présentent des âmes médianes (40) qui aboutissent au passage-tube (37) de la partie médiane (35) aménagé en tant que tubulure, les âmes médianes (40) se terminant, vers l'extrémité ouverte des bras (36), chacune en une fourche (41).

8. Agencement-cadre selon l'une des revendications 1 à 7, caractérisé par le fait que les bras (36) de la pièce de liaison (34) sont placés dans les extrémités des rails profilés (1) et sont reliés les uns aux autres, des bandes d'étanchéité (48) étant insérées entre les surfaces intérieures des rails profilés (1) et les surfaces extérieures des bras (36) de la pièce de liaison (34).

9. Agencement-cadre selon revendications 7 et 8, caractérisé par le fait qu'à chaque fois l'âme médiane (13) d'un rail profilé (1) est emboîtée dans la fourche (41) d'un bras (36), l'extrémité du rail profilé (1) débordant au-delà de l'extrémité de son âme médiane (13).

10. Agencement-cadre selon l'une des revendications 7 à 9, caractérisé par le fait que le décalage en hauteur entre la surface inférieure de la partie médiane (35) de la pièce de liaison (34) et la surface inférieure des bras (36) correspond à la hauteur de l'âme (12) du rail profilé (1).

11. Agencement-cadre selon l'une des revendications 7 à 10, caractérisé par le fait que le passage-tube ((37, 52) de la partie médiane (35) est réalisé pour le passage de conduites (38, 39) en tous genres, un organe d'étanchéité (45) étant prévu entre conduite (38, 39) et passage-tube (37).

**12.** Agencement-cadre selon revendication 11, caractérisé par le fait que l'organe d'étanchéité (45) est réalisé en tant qu'anneau qui, au moyen d'un manchon fileté (46), est poussé contre un épaulement (47) formé dans le passage-tube (37).

**13.** Agencement-cadre selon l'une des revendications 7 à 11, caractérisé par le fait que la tubulure (37) dans la partie médiane (35) de la pièce de liaison (34) présente une entaille (44) pour l'entrée du fluide (21) à l'intérieur de la tubulure (37).

**14.** Agencement-cadre selon l'une des revendications 1 à 13, caractérisé par le fait que rails profilés (1) et pièces de liaison (34) sont faits en aluminium extrudé avec surface anodisée.

**15.** Agencement-cadre selon l'une des revendications 8, 10 à 12, et 14, caractérisé par le fait que le passage-tube (52) est réalisé en tant que simple alésage par lequel passent des tuyaux de sprinklers ou des tubes vides, les âmes médianes (40) se terminant contre l'alésage.

**16.** Agencement-cadre selon l'une des revendications 1 à 15, caractérisé par le fait que la tête de la partie médiane (13, 50) du rail profilé est réalisée en tant que rainure en forme de T.

Fig.1

EP 0 187 321 B1

Fig. 3

Fig. 2

# Fig. 4

Fig. 5

Fig. 6

Fig. 7

13